# FASCICULE DE BREVET EUROPEEN

(11) **EP 3 154 826 B1**
(45) Date de publication et mention de la délivrance du brevet: **15.08.2018**
(21) Numéro de dépôt: 15732845.1
(22) Date de dépôt: 04.06.2015
(51) Int. Cl.: B60R 13/02, B60K 37/04, B60R 21/045

(54) **AGENCEMENT D'UN ÉLÉMENT DE GARNITURE DE PLANCHE DE BORD D'UN VÉHICULE AUTOMOBILE SUR UN ÉLÉMENT DE SUPPORT DE CETTE PLANCHE DE BORD**
ANORDNUNG EINES ARMATURENBRETTVERKLEIDUNGSTEILS EINES KRAFTFAHRZEUGES AN EINEM TRAGENDEN ELEMENT DIESES ARMATURENBRETTS
ARRANGEMENT OF A DASHBOARD TRIM ELEMENT OF A MOTOR VEHICLE ON A SUPPORTING ELEMENT OF SAID DASHBOARD

(30) Priorité: 10.06.2014 FR 1455256
(43) Date de publication de la demande: 19.04.2017
(73) Titulaire: Renault s.a.s, 92100 Boulogne-Billancourt (FR)
(72) Inventeur: LE LEIZOUR, Alban, F-78580 Maule (FR); MARCEAU, Thierry, F-92500 Rueil Malmaison (FR); BERTRAND, Christophe, F-28210 Vacheresses Les Basses (FR)
(86) Numéro de dépôt international: PCT/FR2015/051483
(87) Numéro de publication internationale: WO 2015/189504

(56) Documents cités:
- FR-A1- 2 979 589
- US-A1- 2010 295 285
- US-A1- 2012 200 108

## Description

L'invention concerne un agencement d'un élément de garniture de planche de bord d'un véhicule automobile sur un élément de support de cette planche de bord.

En particulier, l'invention concerne un agencement d'un élément de garniture de la console centrale de la planche de bord d'un véhicule automobile, sur le corps de planche de bord auquel il est solidarisé. Cette console centrale est située en regard de l'espace séparant les sièges avant du véhicule suivant la direction longitudinale du véhicule.

Lors d'un accident, il peut ainsi arriver que la tête d'un passager arrière, notamment d'un enfant, soit propulsée contre la console centrale du véhicule.

Lorsque l'élément de garniture de la console centrale est clipsé sur la planche de bord, il est fréquent que cet élément de garniture de la console centrale se détache lors d'un tel choc, mettant la tête du passager au contact du corps de planche de bord, servant de support à l'élément de garniture. Or, ce corps de planche de bord peut comprendre des arêtes vives, qui peuvent provoquer des blessures relativement importantes au passager.

Il est également connu de visser l'élément de garniture à la planche de bord, mais une telle mise sous contrainte peut amener l'élément de garniture à casser lors du choc, et à faire apparaitre des arêtes vives aux endroits de cassure. Le document US 2012/0200108 A1 relève un agencement d'un élément de garniture de planche de bord d'un véhicule automobile selon le préambule de la revendication 1. Il existe ainsi un besoin d'une solution simple et peu coûteuse pour protéger le passager du contact avec les arêtes vives de la planche de bord.

A cet effet, l'objet de l'invention concerne un agencement d'un élément de garniture de planche de bord d'un véhicule automobile avec les caractéristiques de la revendication 1. Ainsi, il est possible de retenir l'élément de garniture relativement près de l'élément de support, évitant ainsi l'apparition d'arêtes vives du fait du déplacement de l'élément de garniture suite à un choc.

Avantageusement, les moyens de fixation sont conformés pour se rompre ou se désolidariser de l'élément de support lors d'un choc. Ceci permet d'éviter que l'élément de garniture ne casse sous des efforts de retenue trop importants, améliorant ainsi l'absorption du choc et limitant les risques de blessure. Les moyens de fixation peuvent par exemple s'agir de clips, éventuellement fusibles.

Avantageusement et de façon non limitative, l'agencement peut comprendre un unique élément de maintien. Ainsi, l'élément de garniture est relativement simple à monter et à démonter de l'élément de support. Selon l'invention l'élément de maintien traverse un orifice de la paroi de l'élément de support à laquelle est fixé l'élément de garniture et venir en prise avec une face de cette paroi opposée à la face recevant l'élément de garniture.

Notamment, cet orifice peut être conformé pour coopérer avec une extrémité de l'élément de maintien en position arrachée de l'élément de garniture. Par exemple, l'orifice peut présenter un bord saillant à cet effet. Selon l'invention ledit élément de maintien présente une forme de crochet, dont une extrémité recourbée est située à ladite distance prédéterminée de la paroi de l'élément de support dans la position d'utilisation normale, et est en contact avec ladite paroi de l'élément de support dans la position arrachée. Ainsi, l'élément de maintien est relativement simple et peu couteux à produire.

En particulier, l'élément de maintien peut s'étendre dans une direction sensiblement longitudinale du véhicule et vers le bas lorsque l'agencement est monté dans le véhicule. Ainsi, l'élément de maintien est relativement fiable lors d'un choc accidentel.

L'élément de garniture peut être un élément de garniture central, notamment disposé en partie inférieure de la planche de bord. Il peut s'agir par exemple d'un élément de garniture central inférieur destiné à être disposé au dessus du levier de changement de vitesse du véhicule.

Par exemple, l'élément de garniture peut être un élément de garniture de la console centrale de la planche de bord du véhicule automobile, fixé sur un corps de planche de bord.

Avantageusement, ledit élément de maintien peut s'étendre à proximité d'un bord supérieur droit de l'élément de garniture, par rapport au sens de marche du véhicule. Ainsi, l'élément de garniture absorbe mieux les efforts lors d'un choc accidentel, et protège mieux un passager des arêtes vives pouvant apparaître lors du choc.

La distance prédéterminée à laquelle est situé l'élément de maintien dans la position arrachée peut être déterminée en fonction des éléments entourant l'élément de garniture et des déplacements de cet élément de garniture observés en cas de choc. Avantageusement, cette distance prédéterminée peut être suffisante pour permettre une certaine absorption du choc.

A titre d'exemple, la distance prédéterminée peut être de 20 à 30 mm et par exemple de 25 mm. Ainsi, l'élément de garniture peut se déplacer suffisamment pour absorber le choc, tout en assurant une protection relativement bonne de la victime du choc en évitant l'apparition d'arêtes vives.

Cette distance prédéterminée peut varier, vers des valeurs plus ou moins grandes selon les caractéristiques du véhicule, en particulier en fonction des dimensions de la planche de bord de l'habitacle du véhicule automobile.

Avantageusement, l'élément de maintien peut être réalisé d'une pièce avec l'élément de garniture, de préférence en matériau polymère, chargé ou non de talc, fibres de verre ou fibres de carbone. Le polymère peut être un polypropylène, de préférence chargé. L'élément de garniture est alors relativement simple à fabriquer et relativement résistant.

L'élément de maintien peut également être réalisé dans un matériau différent de celui de l'élément de garniture (matériau métallique, polymère ou autre). Il est alors solidarisé à l'élément de garniture, par exemple par collage, vissage, clippage ou autre.

L'invention se rapporte en outre à un véhicule automobile comprenant un agencement d'un élément de garniture de planche de bord d'un véhicule automobile sur un élément de support de cette planche de bord, tel que décrit précédemment.

L'invention est maintenant décrite en référence aux dessins annexés, non limitatifs, dans lesquels :

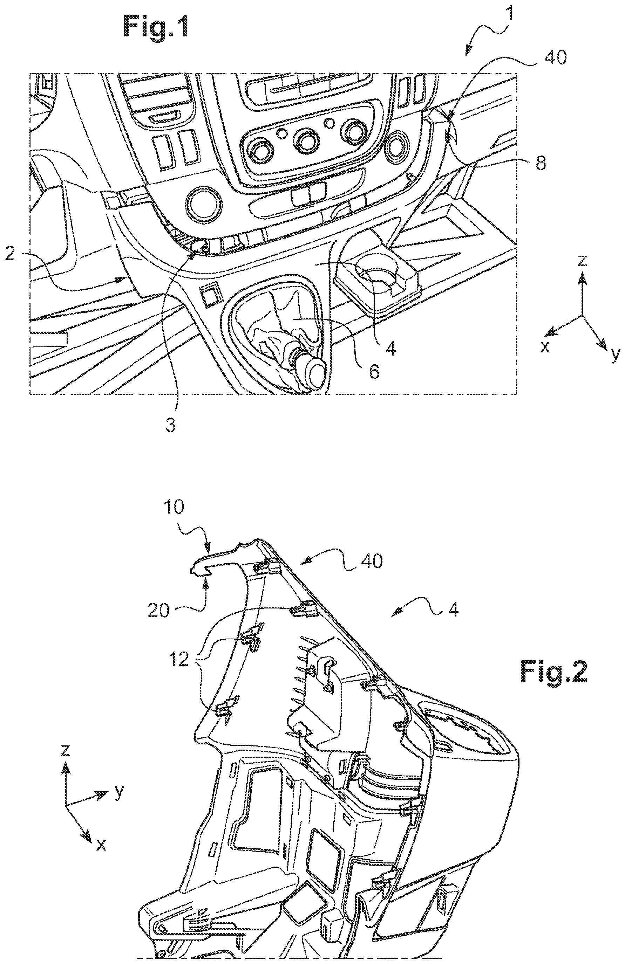

- la figure 1 est une vue en perspective d'une console centrale de planche de bord d'un véhicule automobile, dans laquelle l'élément de garniture est en position arrachée, selon un mode de réalisation de l'invention ;
- la figure 2 est une vue en perspective de l'élément de garniture représenté figure 1 ;

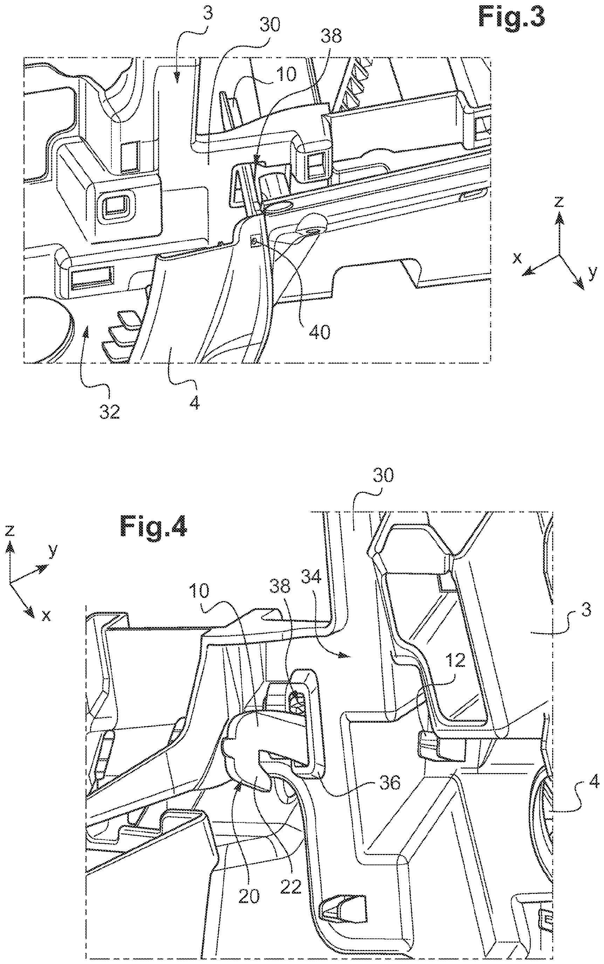

- la figure 3 représente un élément de maintien faisant partie de l'élément de garniture représenté figure 1, l'élément de garniture étant dans une position d'utilisation normale fixée au corps de planche de bord ;
- la figure 4 est une vue en perspective du corps de planche de bord montrant l'élément de maintien traversant et tenu à distance dans la position d'utilisation normale.

Dans la présente description, les termes avant, arrière, supérieur, inférieur, font référence aux directions avant et arrière du véhicule. Les axes X, Y, Z, correspondent respectivement à l'axe longitudinal (d'avant en arrière), transversal et vertical du véhicule.

Par sensiblement horizontal, longitudinal ou vertical, on entend une direction/un plan formant un angle d'au plus ±20°, voire d'au plus 10° ou d'au plus 5°, avec une direction/un plan horizontal, longitudinal ou vertical.

Selon un mode de réalisation, un véhicule automobile, non représenté, comprend une planche de bord 1, disposée dans l'habitacle.

Cette planche de bord 1 présente une partie centrale appelée également console centrale 2, située sensiblement au centre du véhicule suivant la direction Y, autrement dit située sensiblement entre les sièges avant du véhicule.

La planche de bord 1 représentée comprend un élément de garniture 4 et un élément de support 3, ici un corps 3 de planche de bord 1.

L'élément de garniture 4 est ici un élément de la console centrale 2, qui est notamment disposé au dessus du levier de vitesse et qui s'étend en partie inférieure de la planche de bord 1.

L'élément de garniture 4 est fixé à une paroi 30 de l'élément de support 3, par des moyens de fixation 12, ici des clips métalliques 12, dans une position normale d'utilisation correspondant à une position de montage de la planche de bord 1 dans le véhicule. Dans la position normale d'utilisation l'élément de garniture 4 est plaqué contre l'élément de support 3 et est clipsé sur cet élément de support 3 par les moyens de fixation 12.

Lors d'un choc, en particulier d'un choc accidentel, un élément projeté, par exemple la tête d'un passager, peut provoquer le déplacement de l'élément de garniture 4 de sa position normale d'utilisation vers une position arrachée dans laquelle il n'est plus fixé à l'élément de support 3, en particulier à cause de la rupture ou du désagrafage des clips métalliques 12.

L'agencement selon l'invention comprend au moins un élément de maintien 10 conformé pour retenir l'élément de garniture en liaison avec l'élément de support 3 à une distance prédéterminée, ici à une distance de 25 mm dans la position arrachée.

Dans le mode de réalisation représenté sur les figures, l'agencement comprend un unique élément de maintien 10, ici un élément en forme de crochet, comprenant une extrémité recourbée 22 située à la distance prédéterminée de la paroi 30 de l'élément de support 3 dans la position normale. Autrement dit, l'élément de maintien 10 traverse l'élément de support 3 par un orifice 38, et s'étend du côté opposé à la face de contact 32 entre l'élément de garniture 4 et l'élément de support 3, de telle sorte que l'extrémité recourbée 22 est maintenue à environ 25 mm de la face 34 opposée à la face de contact 32 de la paroi 30.

L'élément de maintien 10, s'étend ici dans une direction sensiblement longitudinale du véhicule, vers l'avant, et orienté vers le bas. Autrement dit, l'extrémité recourbée 22 s'étend vers le bas, de sorte que, lors d'un choc au cours duquel les éléments percutants la console centrale 2 se déplacent généralement du haut vers le bas du véhicule et de l'arrière vers l'avant du véhicule, l'extrémité recourbée 22 crochète une partie saillante 36 de la paroi 30, de manière à ce qu'en position arrachée, l'élément de garniture 4 reste en liaison avec l'élément de support 3 et soit maintenu à la distance prédéterminée.

La partie saillante 36 est située autour de l'orifice 38 de l'élément de support 3, sur la face opposée 34 de la paroi 30 de l'élément de support 3, au travers de laquelle l'élément de maintien 10 traverse l'élément de support 3.

Dans le présent exemple, l'élément de maintien 10 s'étend à proximité d'un bord supérieur droit 40 (suivant le sens de marche du véhicule) de l'élément de garniture 4. Autrement dit, vu de l'intérieur de l'habitacle du véhicule automobile, lorsque l'élément de garniture 4 est dans sa position normale d'utilisation, l'élément de maintien 10 est masqué par l'élément de garniture 4, et s'étend au travers de l'élément de support 10, depuis un bord supérieur droit 40 de l'élément de garniture 4, dont il est solidaire.

Dans ce mode de réalisation l'élément de maintien 10 est moulé d'une pièce avec l'élément de garniture 4 dans un matériau polymère de type polypropylène chargé de talc.

Ainsi l'élément de maintien est relativement solide et est relativement peu coûteux à fabriquer. Il est ainsi possible d'améliorer la protection des passagers lors d'un choc en limitant la formation des arêtes vives provenant du corps 3 de planche de bord 1, tout en limitant les risques de casse de l'élément de garniture.

## Revendications

1. Agencement d'un élément de garniture (4) de planche de bord (1) d'un véhicule automobile sur un élément de support (3) de cette planche de bord (1), ledit élément de garniture (4) étant fixé par des moyens de fixation (12) à une paroi (30) de l'élément de support (3) dans une position d'utilisation normale, ledit élément de garniture (4) occupant en outre, suite à un choc, une position arrachée dans laquelle les moyens de fixation (12) sont désolidarisés de l'élément de support (3), cette position arrachée étant distincte de la position d'utilisation normale, ledit agencement comprenant au moins un élément de maintien (10) conformé pour retenir l'élément de garniture (4) en liaison avec l'élément de support (3) à une distance prédéterminée de celui-ci dans ladite position arrachée, **caractérisé en ce que** le dit au moins un élément de maintien (10) traverse un orifice (38) de la paroi (30) de l'élément de support (3) et vient en prise avec une face (34) de cette paroi (30) opposée à la face (32) recevant l'élément de garniture (4), et **en ce que** ledit élément de maintien (10) présente une forme de crochet, dont une extrémité recourbée (20) est située à ladite distance prédéterminée de la paroi (30) de l'élément de support (3) dans la position d'utilisation normale, et est en contact avec ladite paroi (30) de l'élément de support (3) dans la position arrachée.

2. Agencement d'un élément de garniture (4), selon la revendication 1, **caractérisé en ce que** les moyens de fixation (12) sont conformés pour se rompre ou se désolidariser de l'élément de support (3) lors d'un choc.

3. Agencement d'un élément de garniture (4) selon l'une quelconque des revendications 1 ou 2, **caractérisé en ce qu'**il comprend un unique élément de maintien (10).

4. Agencement d'un élément de garniture (4) selon l'une quelconque des revendications 1 à 3, **caractérisé en ce que** l'élément de maintien (10) s'étend dans une direction sensiblement longitudinale du véhicule et vers le bas lorsque l'agencement est monté dans le véhicule.

5. Agencement d'un élément de garniture (4) selon l'une quelconque des revendications 1 à 4, **caractérisé en ce que** l'élément de garniture (4) est un élément de garniture central, notamment disposé en partie inférieure de la planche de bord (1).

6. Agencement d'un élément de garniture (4) selon l'une quelconque des revendications 1 à 5, **caractérisé en ce que** ledit élément de maintien (3) s'étend à proximité d'un bord supérieur droit (40) de l'élément de garniture (4).

7. Agencement d'un élément de garniture (4) selon l'une quelconque des revendications 1 à 6, **caractérisé en ce que** l'élément de maintien (10) est réalisé d'une pièce avec l'élément de garniture (4), de préférence en matériau polymère.

8. Véhicule automobile comprenant un agencement d'un élément de garniture (4) de planche de bord (1) d'un véhicule automobile sur un élément de support (3) de cette planche de bord (1), selon l'une quelconque des revendications 1 à 7.

## Patentansprüche

1. Anordnung eines Verkleidungselements (4) eines Armaturenbretts (1) eines Kraftfahrzeugs auf einem Trägerelement (3) dieses Armaturenbretts (1), wobei das Verkleidungselement (4) in einer normalen Benutzungsstellung durch Befestigungseinrichtungen (12) an einer Wand (30) des Trägerelements (3) befestigt ist, wobei das Verkleidungselement (4) außerdem nach einem Aufprall eine abgerissene Stellung einnimmt, in der die Befestigungseinrichtungen (12) vom Trägerelement (3) gelöst sind, wobei diese abgerissene Stellung sich von der normalen Benutzungsstellung unterscheidet, wobei die Anordnung mindestens ein Halteelement (10) enthält, das so gestaltet ist, dass es das Verkleidungselement (4) in der abgerissenen Stellung mit dem Trägerelement (3) in einem vorbestimmten Abstand zu diesem in Verbindung hält, **dadurch gekennzeichnet, dass** das mindestens eine Halteelement (10) eine Öffnung (38) der Wand (30) des Trägerelements (3) durchquert und mit einer Seite (34) dieser Wand (30) entgegengesetzt zu der das Verkleidungselement (4) aufnehmenden Seite (32) in Eingriff kommt, und dass das Halteelement (10) die Form eines Hakens aufweist, von dem ein umgebogenes Ende (20) sich in der normalen Benutzungsstellung in dem vorbestimmten Abstand von der Wand (30) des Trägerelements (3) befindet, und in der abgerissenen Stellung mit der Wand (30) des Trägerelements (3) in Kontakt ist.

2. Anordnung eines Verkleidungselements (4) nach Anspruch 1, **dadurch gekennzeichnet, dass** die Befestigungseinrichtungen (12) so gestaltet sind, dass sie bei einem Aufprall brechen oder sich vom Trägerelement (3) lösen.

3. Anordnung eines Verkleidungselements (4) nach einem der Ansprüche 1 oder 2, **dadurch gekennzeichnet, dass** sie ein einziges Halteelement (10) enthält.

4. Anordnung eines Verkleidungselements (4) nach einem der Ansprüche 1 bis 3, **dadurch gekennzeichnet, dass** das Halteelement (10) sich im Wesentlichen in einer Längsrichtung des Fahrzeugs und nach unten erstreckt, wenn die Anordnung in das Fahrzeug montiert ist.

5. Anordnung eines Verkleidungselements (4) nach einem der Ansprüche 1 bis 4, **dadurch gekennzeichnet, dass** das Verkleidungselement (4) ein mittleres Verkleidungselement ist, das insbesondere im unteren Bereich des Armaturenbretts (1) angeordnet ist.

6. Anordnung eines Verkleidungselements (4) nach einem der Ansprüche 1 bis 5, **dadurch gekennzeichnet, dass** das Halteelement (3) sich in der Nähe eines geraden oberen Rands (40) des Verkleidungselements (4) erstreckt.

7. Anordnung eines Verkleidungselements (4) nach einem der Ansprüche 1 bis 6, **dadurch gekennzeichnet, dass** das Halteelement (10) aus einem Stück mit dem Verkleidungselement (4) hergestellt wird, vorzugsweise aus Polymermaterial.

8. Kraftfahrzeug, das eine Anordnung eines Verkleidungselements (4) eines Armaturenbretts (1) eines Kraftfahrzeugs auf einem Trägerelement (3) dieses Armaturenbretts (1) nach einem der Ansprüche 1 bis 7 enthält.

## Claims

1. Arrangement of a trim element (4) of a dashboard (1) of a motor vehicle on a support element (3) of this dashboard (1), the said trim element (4) being fixed by fixing means (12) to a wall (30) of the support element (3) in a normal use position, the said trim element (4) additionally occupying, following an impact, an extracted position in which the fixing means (12) are detached from the support element (3), this extracted position being distinct from the normal use position, the said arrangement comprising at least one retaining element (10) configured to retain the trim element (4) in connection with the support element (3) at a predetermined distance therefrom in the said extracted position, **characterized in that** the said at least one retaining element (10) passes through an orifice (38) in the wall (30) of the support element (3) and comes into engagement with a face (34) of this wall (30) that is opposite to the face (32) receiving the trim element (4), and **in that** the said retaining element (10) has a hook shape of which a curved end (20) is situated at the said predetermined distance from the wall (30) of the support element (3) in the normal use position, and is in contact with the said wall (30) of the support element (3) in the extracted position.

2. Arrangement of a trim element (4) according to Claim 1, **characterized in that** the fixing means (12) are configured to break or to detach from the support element (3) during an impact.

3. Arrangement of a trim element (4) according to either one of Claims 1 and 2, **characterized in that** it comprises a single retaining element (10).

4. Arrangement of a trim element (4) according to any one of Claims 1 to 3, **characterized in that** the retaining element (10) extends in a substantially longitudinal direction of the vehicle and towards the bottom when the arrangement is mounted in the vehicle.

5. Arrangement of a trim element (4) according to any one of Claims 1 to 4, **characterized in that** the trim element (4) is a central trim element, in particular arranged in the lower part of the dashboard (1).

6. Arrangement of a trim element (4) according to any one of Claims 1 to 5, **characterized in that** the said retaining element (3) extends in the vicinity of a straight upper edge (40) of the trim element (4).

7. Arrangement of a trim element (4) according to any one of Claims 1 to 6, **characterized in that** the retaining element (10) is produced in one piece with the trim element (4), preferably of polymer material.

8. Motor vehicle comprising an arrangement of a trim element (4) of a dashboard (1) of a motor vehicle on a support element (3) of this dashboard (1), according to any one of Claims 1 to 7.
